# EUROPÄISCHE PATENTSCHRIFT

(11) **EP 1 464 598 B1**
(45) Veröffentlichungstag und Bekanntmachung des Hinweises auf die Patenterteilung: **02.09.2009**
(21) Anmeldenummer: 04076069.6
(22) Anmeldetag: 05.04.2004
(51) Int. Cl.: B65G 49/06, B66F 9/18

(54) **Vorrichtung zum Hantieren von Platten**
Device for manipulating panels
Dispositif pour manipuler des panneaux

(30) Priorität: 03.04.2003 NL 1023094
(43) Veröffentlichungstag der Anmeldung: 06.10.2004
(73) Patentinhaber: Copier Engineering B.V., 4283 JJ Giessen (NL)
(72) Erfinder: Copier, Jan, 5306 GB Brakel (NL)
(74) Vertreter: Winckels, Johannes Hubertus F.

(56) Entgegenhaltungen:
- EP-A- 1 043 127
- US-A- 3 361 280
- US-A- 3 926 318
- US-A- 5 224 808
- US-A- 5 584 635

## Beschreibung

Die Erfindung bezieht sich auf eine Vorrichtung zum Hantieren von Platten wie beispielsweise Fensterscheiben, Türen, Gipsplatten, vorfabrizierte Wandteilen und dergleichen.

Diese, oft im Bau verwendeten Platten werden in der Regel mithilfe eines Krans oder eines mobilen Gestells so dicht wie möglich an den Bestimmungsort gebracht und dann manuell positioniert. Das erfordert einen erheblichen Kraftaufwand und bei umfangreichen Platten den Einsatz mehrerer Personen, mindestens eine um die Platte an ihrer Position zu halten und eine um die Platte zu befestigen.

Weiterhin sind mobile Hebemittel bekannt, mit denen eine Platte in einer gewünschten Position gehalten werden kann, sodass sie von einer Person positioniert und montiert werden kann. Das Positionieren in vertikaler Richtung erfolgt durch Verstellung der Hebemittel, in der Regel über manuell bediente Antriebsmittel. Positionierung in horizontaler Richtung erfolgt durch Umsetzen der Hebemittel. Eine schnelle, genaue Positionierung ist dadurch nicht möglich. Außerdem sind die bekannten mobilen Hebemittel in der Regel zu umfangreich um mit Platte und allem durch eine Türöffnung gefahren zu werden, was sie für Verwendung im Haus ungeeignet macht. US 5,584,635 zeigt ein Beispiel eines bekannten Hebemittels.

Die Erfindung hat das Ziel eine Vorrichtung zum Hantieren von Platten zu schaffen, wobei wenigstens einige der genannten Nachteile der bekannten Vorrichtungen aufgehoben werden, jedoch die Vorteile erhalten bleiben.

Die Erfindung hat insbesondere das Ziel eine Vorrichtung zu schaffen, mit der die Platten einfach, schnell und genau hantiert, vor allem angehoben, transportiert und positioniert werden können und zwar vorzugsweise von einer Person.

Die Erfindung hat weiterhin das Ziel, eine Vorrichtung des oben beschriebenen Typs zu schaffen, die einerseits einen großen Hantierbereich, also eine große Reichweite, hat und andererseits einen solch kompakten Transportstand einnehmen kann, dass die Vorrichtung zusammen mit einer darin aufgenommenen Platte durch einen relativ schmalen Durchgang, beispielsweise eine Standardtüröffnung, transportiert werden kann, und sich also für die Verwendung im Haus eignet.

Die Erfindung hat weiterhin das Ziel eine Vorrichtung zu schaffen, bei der die Handhabung hauptsächlich über mechanische Antriebsmittel erfolgt, ohne nennenswerten manuellen Kraftaufwand.

Dieses und weitere Ziele werden mit einer erfindungsgemäßen Vorrichtung, gekennzeichnet durch die Maßnahmen nach Anspruch 1, wenigstens teilweise erreicht.

Bei einer erfindungsgemäßen Vorrichtung wird vorteilig die Erkenntnis genutzt, dass durch schräges Positionieren der Platte in die Vorrichtung beim Transport unter Einschließung eines spitzen Winkels mit der vertikalen Ebene nicht nur die Durchfahrtshöhe der Vorrichtung, sondern auch ihre Breite begrenzt werden kann. Das wird erreicht, indem der hauptsächlich dreieckige Platz unter der Platte optimal zur Aufnahme der Hantiermittel genutzt werden kann. Dazu sind die Hantiermittel, insbesondere die Angriffsmittel und die Rahmenteile so untereinander schwenkbar und/oder verschiebbar verbunden, dass sie in den genannten dreieckigen Raum einklappbar sind. So wird zumindest während des Transports eine sehr kompakte Vorrichtung erhalten, welche durch relativ schmale Passagen wie beispielsweise eine Türöffnung gelotst werden kann. Dank der schwenkbaren und/oder verschiebbaren Verbindungen zwischen den Rahmenteilen und den Angriffsmitteln können diese Angriffsmittel in ausgeklapptem Zustand einen erheblichen Bereich einnehmen. Kurzum, dank der Kombination von Maßnahmen nach Anspruch 1 wird eine Vorrichtung erhalten, die einerseits beispielsweise zum Transport in einen sehr kompakten Zustand gebracht werden kann und andererseits doch eine erhebliche Reichweite und damit Hantierfreiheit hat.

Der Rahmen ist mittels eines Drehtischs schwenkbar mit dem Untergestell verbunden, um eine hauptsächlich vertikale erste Schwenkachse. Dank einer derartigen, schwenkbaren Aufstellung des Rahmens um eine hauptsächlich vertikale Achse können die mit dem Rahmen verbundenen Angriffsmittel einfach in einer kreisabschnittförmigen Bahn um das Untergestell herum bewegt werden, ohne dass das Untergestell dazu an einen anderen Platz bewegt werden muss. Dadurch ist hinsichtlich der bekannten Vorrichtungen eine einfachere, schnellere und genauere Positionierung einer in die Vorrichtung aufgenommenen Platte möglich.

In einer vorteiligen Ausführungsform wird eine erfindungsgemäße Vorrichtung durch die Maßnahmen nach Anspruch 6 gekennzeichnet.

Ein solcher L-förmiger Hauptrahmen schließt besonders gut an den dreieckigen Raum unter der schräg eingesetzten Platte an, da dieser Rahmen die Basis und die senkrecht stehende Seite dieses Raums begrenzen kann. Dabei bleibt zwischen beiden Füßen des Rahmens ausreichend Platz zur Aufnahme der übrigen Rahmenteile, Antriebs- und Angriffsmittel übrig. Außerdem kann der Rahmen die genannten Teile während des Transports zumindest teilweise schützen.

In einer eingehenderen vorteiligen Ausarbeitung wird eine erfindungsgemäße Vorrichtung durch die Maßnahmen nach Anspruch 8 gekennzeichnet.

Ein L-förmiger Unterrahmen kann kompakt zwischen die Füße des Hauptrahmens - dazu parallel - aufgenommen werden und dabei zusammen mit der Platte einen neuen dreieckigen Raum umschließen, welcher etwas kleiner ist als der zwischen Hauptrahmen und Platte, jedoch ausreichend Raum zur Aufnahme der übrigen Hantiermittel wie Angriffs- und Antriebsmittel bietet.

In einer weiteren vorteiligen Ausarbeitung wird eine, erfindungsgemäße Vorrichtung durch die Maßnahmen nach einem oder mehreren der Ansprüche 9-12 gekennzeichnet.

Dank dieser untereinander verschiebbaren und/oder schwenkbaren Verbindungen ist der Unterrahmen mit den Angriffsmitteln aus dem oben beschriebenen kompakten Transportstand über einen relativ großen horizontalen und vertikalen Bereich ausklappbar, sodass die Angriffsmittel einen relativ großen Angriffsbereich erreichen können. Dank der verschiedenen Schwenk- und Verschiebefreiheiten können die Angriffsmittel außerdem sehr genau positioniert werden, sodass eine aufzunehmende Platte immer aus einem richtigen Stand angegangen werden kann und eine zu positionierende Platte immer in einer gewünschten Position manövriert werden kann. Einmal in der gewünschten Position kann außerdem dank der Rotation der Platte um die hauptsächlich rechtwinklig aufeinander stehende vierte und fünfte Schwenkachse der Angriffsmittel die Ausrichtung der Platte noch angepasst werden.

Die Schwenk- und/oder Verschiebeeinrichtungen werden vorzugsweise mit geeigneten Antriebsmitteln kombiniert, sodass die betreffenden Teile vollständig oder teilweise mechanisch zu einem gewünschten Stand bewegt werden können. Die Antriebsmittel sind weiterhin vorzugsweise fernbedienbar.

In einer weiteren vorteiligen Ausführungsform ist das Untergestell der Vorrichtung mit Stützmitteln versehen, die vorzugsweise ausklappbar oder ausschiebbar sind. Damit kann die Standfläche des Untergestells vergrößert werden, sodass eine noch stabilere Lage erreicht wird. Die Stützmittel sind außerdem vorzugsweise so einstellbar, dass damit das Untergestell immer hauptsächlich horizontal aufgestellt werden kann, ungeachtet von Unebenheiten im Untergrund. Eventuell kann das Untergestell weiterhin mit zusätzlichem Ballast versehen werden, um ein Gegengewicht für eine oder mehrere Platten, die von der Vorrichtung aufgenommen werden, zu bieten und so eine ausgewogene Vorrichtung zu erhalten. Auch kann das Untergestell mit einem oder mehreren Stützleisten versehen werden, worin oder worauf eine Platte beim Transport ruhen kann, sodass die Angriffsmittel zumindest teilweise entlastet werden können.

In den weiteren Folgeansprüchen werden weitere vorteilige Ausführungsformen an einer erfindungsgemäßen Vorrichtung dargestellt. Zur Verdeutlichung werden eine erfindungsgemäße Vorrichtung und ihre Verwendung anhand der Zeichnung genauer erläutert. Dabei zeigt:
Abb. 1 in perspektivischer Ansicht eine erfindungsgemäße Vorrichtung in ausgestrecktem Stand, geeignet zur Aufnahme und Positionierung einer Platte;
Abb. 2 in perspektivischer Ansicht die Vorrichtung laut Abb. 1 in einem Transportstand;
Abb. 3 die Vorrichtung laut Abb. 2 einschließlich Platte in Vorderansicht;
Abb. 4 die Vorrichtung laut Abb. 2 ohne Platte in Hinteransicht;
Abb. 5 die Vorrichtung laut Abb. 2 ohne Platte in Seitenansicht.

In dieser Beschreibung haben gleiche oder übereinstimmende Teile gleiche oder übereinstimmende Verweise (Ziffern). Unter dem Begriff Platte wird mindestens ein hauptsächlich plattenförmiges, relativ steifes Element beliebiger Form, Abmessung und Material verstanden. Das plattenförmige Element kann eine hauptsächlich geschlossene Oberfläche haben, jedoch auch eine oder mehrere Öffnungen enthalten. Darüber hinaus kann das Element flach, gebogen oder anders profiliert sein. Beispiele für Elemente, die alle unter den Begriff Platte fallen sind eine Fensterscheibe, ein Fensterrahmen, eine Tür, eine Gipsplatte, eine Sandwichplatte oder ein (vorfabriziertes) Wandteil. Unter dem Begriff Hantieren wird in dieser Beschreibung mindestens das Anheben, Transportieren, Positionieren und in jedem gewünschten Zustand festhalten einer Platte verstanden.

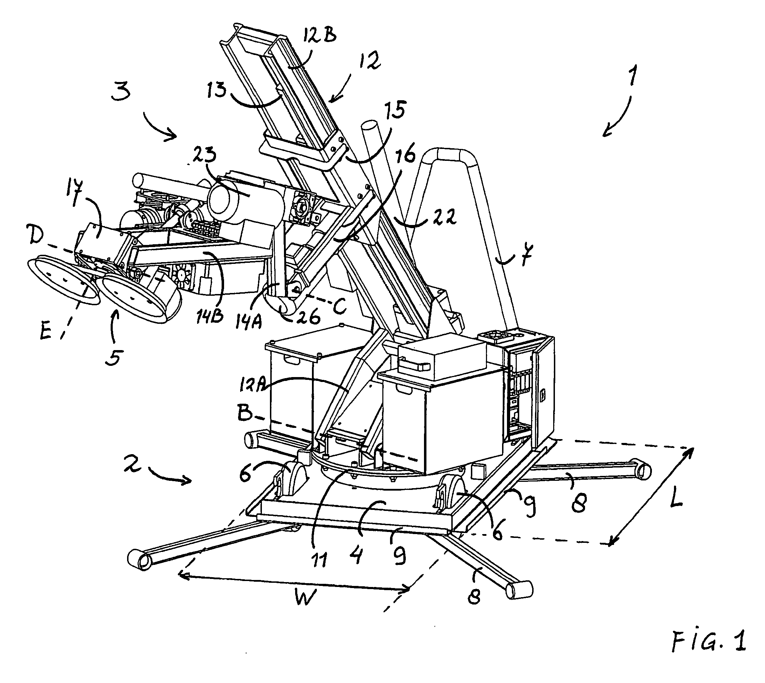

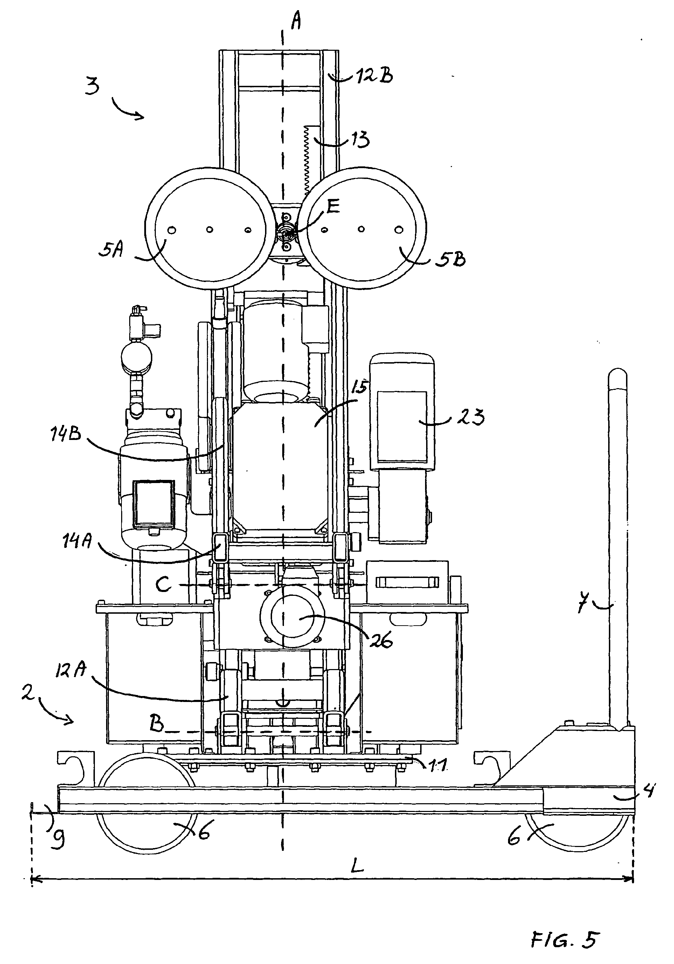

Die in den Abbildungen 1-5 mit der Ziffer 1 angegebene Vorrichtung ist hauptsächlich aufgebaut aus einem mobilen Untergestell 2, Angriffsmittel 5 zum Hantieren einer Platte 10 und einem Rahmen 3, welche die Angriffsmittel 5 derart mit dem Untergestell 2 verbindet, dass diese horizontal und vertikal in einem bestimmten Bereich um das Untergestell 2 beweglich sind.

Das Untergestell 2 umfasst eine hauptsächlich rechteckige Grundplatte 4 mit der Länge L und der Breite B, welche in der Nähe ihrer Eckpunkte von den Rädern 6 unterstützt wird, von denen vorzugsweise mindestens eines blockiert werden kann. Stützmittel 8 sind vorgesehen, mit denen das Untergestell 2 bei Stillstand stabil unterstützt werden kann (wie in Abb. 1 gezeigt) und womit die Grundplatte 4 auch auf unebenen Untergründen hauptsächlich horizontal gestellt werden kann. Die Stützmittel 8 sind vorzugsweise so abnehmbar oder einklappbar mit Untergestell 2 verbunden, das sie beim Transport auf oder unter der Grundplatte 4 verborgen werden können, sodass sie in Draufsicht nicht außerhalb der Grundplatte 4 herausragen. Das Untergestell 2 umfasst weiterhin einen Schiebebügel 7, sich an drei Seiten der Grundplatte 4 erstreckende Stützleisten 9 und einen Drehtisch 11, welcher schwenkbar mit der Grundplatte 4 um eine sich in Verwendung hauptsächlich vertikal erstreckende erste Schwenkachse A verbunden ist. Im gezeigten Ausführungsbeispiel wird der Drehtisch 11 manuell um die genannte Schwenkachse A gedreht. Selbstverständlich können auch erste Antriebsmittel 21 vorgesehen werden (nicht gezeigt).

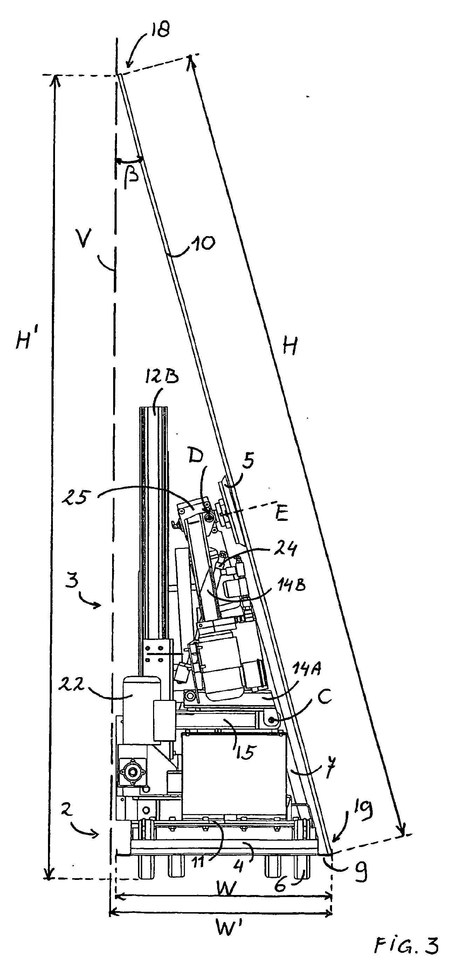

Der Rahmen 3 besteht aus einem hauptsächlich L-förmigen Hauptrahmen 12 und einem kleineren, ebenfalls hauptsächlich L-förmigen Unterrahmen 14, welche über einen noch genauer zu beschreibenden Schlittenmechanismus 13, 15, 26 untereinander verschiebbar verbunden sind. Der Hauptrahmen 12 ist in der Nähe eines Endes seines kurzen Fußes 12A schwenkbar mit dem Drehtisch 11 verbunden, um eine hauptsächlich horizontale, senkrecht auf den kurzen Fuß 12A stehende zweite Schwenkachse B. Zweite Antriebsmittel 22 sind zum Rotieren des Hauptrahmens 12 um die genannte zweite Schwenkachse B vorgesehen. Entlang des langen Fußes 12B ist ein Zahnbügel 13 vorgesehen, an dem entlang Schlitten 15 mithilfe von geeigneten sechsten Antriebsmitteln 26 auf und nieder bewegt werden kann. Der Schlittenmechanismus 15 umfasst einen sich hauptsächlich parallel über dem kurzen Fuß 12A des Hauptrahmens 12 erstreckenden Stützrahmen 16, zwischen dem die genannten sechsten Antriebsmittel 26 aufgehängt sind und worauf weiterhin Unterrahmen 14 mit einem Ende seines kurzen Fußes 14A schwenkbar befestigt ist, um eine dritte Schwenkachse C. Diese dritte Schwenkachse C erstreckt sich hauptsächlich parallel zur zweiten Schwenkachse B des Hauptrahmens 12. Die Lage der Schwenkachse C hinsichtlich des Hauptrahmens 12 ist derart, dass der Unterrahmen 14 in eingeklapptem Zustand, wie in Abb. 3 gezeigt, passend in einen von Stützrahmen 16 und Hauptrahmen 12 gespannten Dreieck liegen kann, wobei sich der kurze und lange Fuß 14A,B jeweils hauptsächlich parallel entlang Stützrahmen 16 und dem langen Fuß 12B des Hauptrahmens 12 erstrecken. Die dritten Antriebsmittel 23 sind vorgesehen, um den Unterrahmen 14 zwischen den in Abb. 3 gezeigten eingeklappten Zustand und einen in Abb. 1 gezeigten ausgeklappten Zustand zu rotieren.

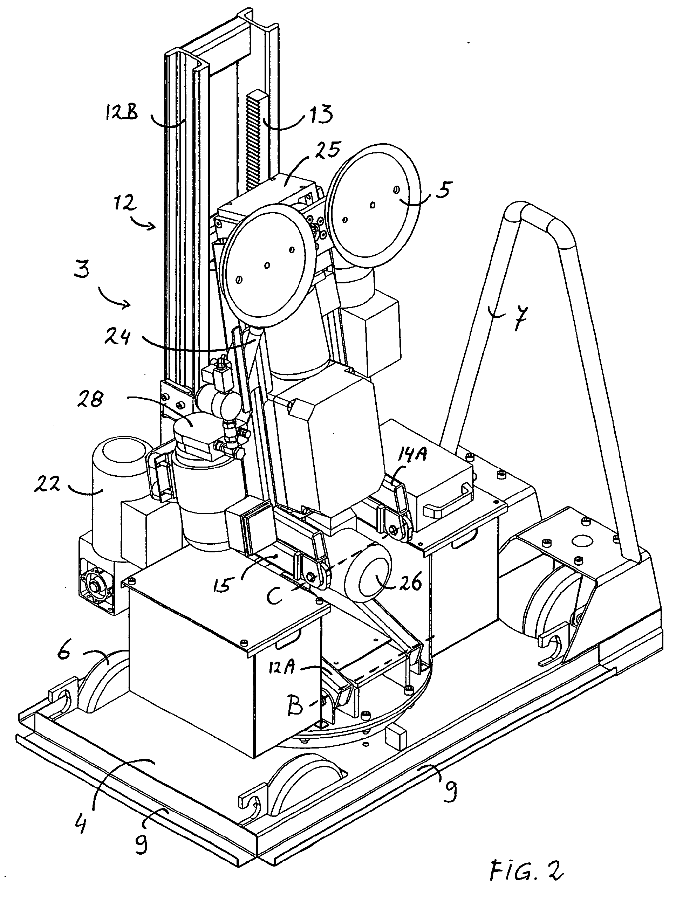

Die Angriffsmittel 5 sind im gezeigten Beispiel als zwei nebeneinander gelegene Vakuumzylinder 5A,B ausgeführt, welche mit Pumpmitteln 28 (siehe Abb. 2) in Verbindung stehen, womit zwischen den Zylindern 5A,B und einer anzugreifenden Platte 10 ein Unterdruck erzeugt werden kann. Es sei deutlich, dass die Angriffsmittel 5, abhängig von der zu hantierenden Platte 10 anders ausgeführt werden können, beispielsweise als Hakenmittel, Klauen oder (Elektro)Magneten. Die Angriffsmittel 5 sind mithilfe einer Aufhängung 17 schwenkbar in der Nähe eines Endes des langen Fußes 14B vom Unterrahmen 14 aufgehängt, um eine vierte Schwenkachse D welche sich hauptsächlich parallel zur zweiten und dritten Schwenkachse B,C erstreckt. An der Aufhängung 17 greifen vierte Angriffsmittel 24 zur Rotation der Angriffsmittel 5 um die vierte Schwenkachse D an. Weiterhin sind in der Aufhängung 17 fünfte Antriebsmittel 25 untergebracht, womit die Angriffsmittel 5 um eine senkrecht auf ihre Angriffsfläche erstreckende fünfte Schwenkachse E rotieren können.

Mit den oben beschriebenen Schwenk- und Verschiebefreiheiten der Rahmen 12, 14 und der Angriffsmittel 5 ist die Vorrichtung 1 zwischen einem kompakten Transportstand, wie in den Abbildungen 3 (mit Platte) und 4 (ohne Platte) gezeigt, geeignet für den Transport von Platten 10 durch relativ enge Durchgänge und einem Hantierstand, wie in Abbildung 1 gezeigt, wobei die Angriffsmittel 5 zum Aufnehmen und/oder Positionieren von Platten 10 über einen relativ großen, dreidimensionalen Bereich beweglich sind, umformbar.

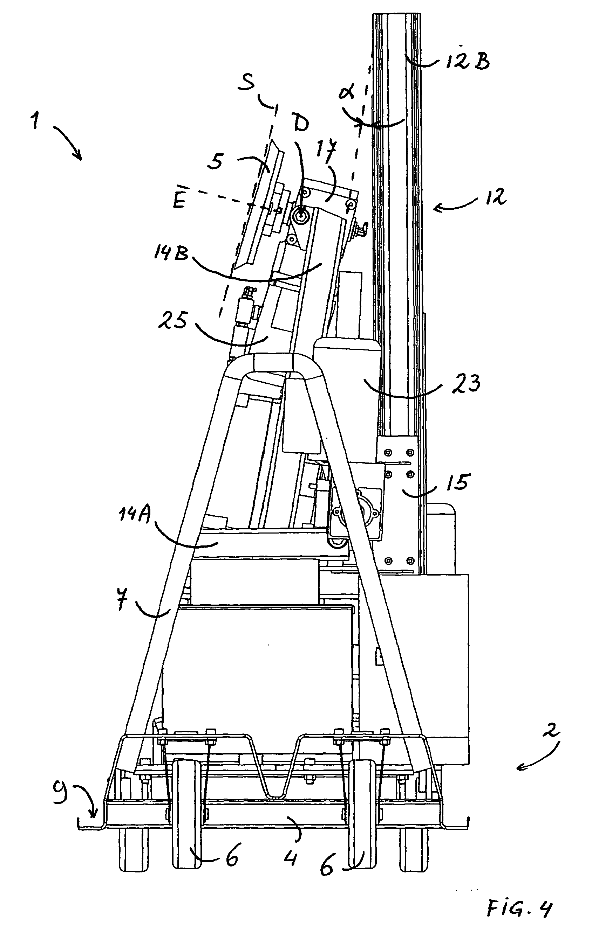

Im Transportstand ist der Drehtisch 11 derart um die erste Schwenkachse A rotiert, dass sich die Füße 12A,B vom Hauptrahmen 12 hauptsächlich parallel an einer Schmalseite von Untergestell 2 erstrecken und ist der Hauptrahmen 12 derart um die zweite Schwenkachse B rotiert, dass sich der lange Fuß 12B hauptsächlich senkrecht zum Drehtisch 11 erstreckt (und der kurze Fuß 12A infolge dessen hauptsächlich parallel zum Drehtisch 11 verläuft). Weiterhin ist der Schlittenmechanismus 15 nach unten, in Richtung des kurzen Fußes 12A vom Hauptrahmen 12 bewogen und ist der Unterrahmen 14 in Richtung des Hauptrahmens 12 um die dritte Schwenkachse C gekippt, sodass der lange Fuß 14B vom Unterrahmen 14 hauptsächlich parallel zu dem von Hauptrahmen 12 liegt, vorzugsweise damit einen spitzen Winkel α einschließt, wie in Abbildung 4 gezeigt. Die Angriffsmittel 5 sind derart um die vierte Schwenkachse D gekippt, dass eine Angriffsfläche S einen noch näher zu besprechenden Winkel β mit der vertikalen Ebene einschließt. Eine von den Angriffsmitteln 5 aufgenommene Platte 10 kann mit einem Unterrand 19 auf einer der Stützleisten 9 von Untergestell 2 ruhen und neigt sich dann mit demselben Winkel β in Richtung des langen Fußes 12B vom Hauptrahmen 12 nach hinten, wie die eher genannten Angriffsmittel 5. Aus Abb. 3 wird deutlich ersichtlich, dass im oben beschriebenen Transportstand die Rahmen 12, 14 und die Antriebsmittel 21-26 dank ihrer gegenseitigen Formgebung und Verbindung so ineinander geschoben werden können, dass sie passend in einem verlorenen dreieckigen Raum zwischen Platte 10 und den Füßen 12A,B von Hauptrahmen 12 aufgenommen werden können. Beachten Sie dabei, dass der Hauptrahmen 12 und Unterrahmen 14 jeweils aus zwei L-förmigen U-Profilen aufgebaut sind, welche untereinander mit Querprofilen verbunden sind. Dank einer derartigen Konstruktion können die verschiedenen Antriebsmittel 21-26 sich zumindest teilweise in den offenen Raum zwischen den U-Profilen erstrecken, wodurch die diversen Teile sehr kompakt ineinander bewegt werden können.

Da außerdem der Winkel β der Angriffsmittel 5 und damit der Winkel β der Platte 10 derart gewählt wurde, dass ein Oberrand 18 davon in Draufsicht gesehen nicht oder nur sehr gering über Untergestell 2 herausragt, ist gewährleistet, dass die Gesamtbreite W' der Vorrichtung 1 mit Platte 10 hauptsächlich gleich Breite W der Vorrichtung 1 ohne Platte 10 ist. Also kann mit geeigneter Maßführung von Untergestell 2 und geeigneter Einstellung von Winkel β eine sehr schmale Vorrichtung 1 realisiert werden, die sich dafür eignet, Platten 10 durch schmale Durchgänge, wie beispielsweise Türöffnungen im Haus zu transportieren. Dabei sorgt der Schrägstand von Platte 10 dafür, dass eine Platte mit einer Höhe H durch einen Durchgang mit einer kleineren Höhe H' transportiert werden kann. Es sollte deutlich sein, dass diese Wirkung größer ist, wenn Winkel β größer wird, und dass deshalb immer eine Abwägung zwischen Mindesthöhe H' und Mindestbreite W' gemacht werden muss. Sollte die Höhe H der zu transportierenden Platte 10 derart groß sein, dass die Höhe H' von der Vorrichtung 1 mit Platte 10 bei einem gegebenen benötigten Winkel β unerwünscht hoch wird, kann Platte 10 mithilfe der Angriffsmittel 5 einfach eine Vierteldrehung um die fünfte Schwenkachse E gedreht werden.

Bei Ankunft am Bestimmungsort wird die Vorrichtung 1 in einem Hantierstand gebracht, wofür ein Beispiel in Abb. 1 gezeigt wird. Dabei werden die Räder blockiert und/oder die Stützmittel 8 herabgelassen um das Untergestell stabil zu positionieren. Dann wird die Platte 10 mithilfe der Angriffsmittel 5 und des Schlittens 15 aus der Stützleiste 19 gehoben und durch Rotation von Rahmen 12, 14 und den Angriffsmitteln 5 um ihre jeweiligen Schwenkachsen A-E in eine gewünschte Position und einen gewünschten Stand manövriert, indem die Platte 10 von einem Benutzer befestigt werden kann. Es sei deutlich, dass bei Abnehmen einer Platte 10, beispielsweise von einem Stapel oder aus einem Regal, die oben genannten Handlungen in umgekehrter Reihenfolge ausgeführt werden können, wonach die Platte 10 in den oben beschriebenen Transportstand gebracht werden kann.

Die Steuerung der verschiedenen Antriebsmittel 21-26 erfolgt vorzugsweise mittels Fernbedienung, beispielweise über einen Steuerknüppel. Auch können sie über eine zentrale Steuereinheit gesteuert werden, wobei ein Benutzer beispielsweise nur Endkoordinaten eingibt. Selbstverständlich können auch manuell zu bedienende Antriebsmittel angewandt werden oder eine Kombination von beiden. Es sei deutlich, dass Platten 10 in der oben genannten Art und Weise in jedem gewünschten Stand in einem dreidimensionalen halbkugelförmigen Bereich um das Untergestell positioniert werden können. Eventuell können die Angriffsmittel 5 derart ausgeführt werden, dass damit mehrere Platten gleichzeitig gegriffen werden können.

Weiterhin können je nach Gewicht der zu manipulierenden Platte 10 Gegengewichte an Vorrichtung 1 hinzugefügt werden, um diese auszubalancieren und also die Stabilität der Vorrichtung zu erhöhen und ihre Bedienung zu vereinfachen und das Kipprisiko zu reduzieren.

Es sollte deutlich sein, dass die mit der oben beschriebenen Ausführungsform beabsichtigte und erreichte Funktionalität (insbesondere die Kombination aus einerseits Kompaktheit und andererseits ausreichender Reichweite und Hantierfreiheit) anders konkretisiert werden kann, wobei die verschiedenen Teile anders geformt und anders untereinander verbunden werden können. So kann der Rahmen beispielsweise als gegliederter Arm ausgeführt werden, dessen Gliederungen mithilfe von geeigneten Roll- oder Kugelscharnieren in einer oder zwei Richtungen gegeneinander drehbar sind. Auch können teleskopisch herausschiebbare Rahmenteile verwendet werden, und kann der Unterrahmen drehbar um eine Längsachse des Hauptrahmens angebracht werden, statt den Hauptrahmen rotierbar mit dem Untergestell zu verbinden. Die beschriebene Ausführungsform muss deshalb keinesfalls als begrenzend betrachtet werden. Es sind innerhalb des von den Ansprüchen gezogenen Rahmens der Erfindung viele Variationen möglich. Außerdem sind Kombinationen von Teilen des gezeigten Ausführungsbeispiels möglich. Solche Kombinationen werden gleichzeitig als Kombinationen im Rahmen der Erfindung nach den nachfolgenden Ansprüchen betrachtet.

## Patentansprüche

1. Vorrichtung zum Hantieren von Platten (10), mit einem mobilen Untergestell (2), Mitteln (5) zum Greifen einer Platte (10) und einem Rahmen (3), welcher die Angriffsmittel (5) beweglich mit dem Untergestell (2) verbindet, wobei der Rahmen (3) aus untereinander schwenkbaren und/oder verschiebbaren Rahmenteilen (12, 14) aufgebaut ist, welche mit geeigneten Antriebsmitteln (21-26) versetzbar sind zwischen:
- einem Transportstand, wobei der Rahmen (3) und die Angriffsmittel (5) in einem Raum mit einem rechtwinkligen dreieckigen Querschnitt aufgenommen werden, begrenzt durch das Untergestell (2), welches die Basis des Dreiecks bildet, einer in Verwendung in der Vorrichtung (1) aufgenommenen Platte (10), welche die schräge Seite des Dreiecks bildet und einer imaginären vertikalen Ebene (V) durch einen Oberrand der Platte (10), welche die gerade Seite des Dreiecks bildet; und
- einem Hantierstand, wobei die Angriffsmittel (5) und der Rahmen (3) sich zumindest teilweise außerhalb des oben genannten dreieckigen Raums erstrecken, in einem sich um oder neben dem Untergestell (2) erstreckenden dreidimensionalen Bereich, **dadurch gekennzeichnet, dass** der Rahmen (3) mittels eines Drehtischs (11) schwenkbar mit dem Untergestell (2) verbunden ist, um eine hauptsächlich vertikale erste Schwenkachse (A).

2. Vorrichtung nach Anspruch 1, wobei der Rahmen (3) schwenkbar mit dem Untergestell (2) verbunden ist, um eine, sich hauptsächlich parallel zum Untergestell (2) erstreckende zweite Schwenkachse (B).

3. Vorrichtung nach einem der vorhergehenden Ansprüche, wobei die Angriffsmittel (5) schwenkbar mit dem Rahmen (3) verbunden sind, um zwei hauptsächlich rechtwinklig aufeinander stehenden Schwenkachsen (D,E).

4. Vorrichtung nach einem der vorhergehenden Ansprüche, wobei der Rahmen (3) einen Hauptrahmen (12), der mit dem Untergestell (2) verbunden ist und einen Unterrahmen (14), der mit den Angriffsmitteln (15) verbunden ist, umfasst.

5. Vorrichtung nach Anspruch 4, wobei der Unterrahmen (14) verschiebbar mit dem Hauptrahmen (12) verbunden ist.

6. Vorrichtung nach Anspruch 4 oder 5, wobei der Hauptrahmen (12) hauptsächlich L-förmig ist, mit einem kurzen Fuß (12A) und einem langen Fuß (12B).

7. Vorrichtung nach Anspruch 6, wobei der Hauptrahmen (12) in der Nähe eines Endes des kurzen Fußes (12A) schwenkbar mit dem Untergestell (2) verbunden ist, um eine hauptsächlich horizontale, senkrecht auf den Füßen (12A,B) stehende zweite Schwenkachse (B).

8. Vorrichtung nach Anspruch 6 oder 7, wobei der Unterrahmen (14) ebenfalls hauptsächlich L-förmig ist und so groß ist, dass dieser Unterrahmen (14) im Transportstand in einem vom kurzen und langen Fuß (12A,B) des Hauptrahmens (12) gespannten Dreiecks aufgenommen werden kann.

9. Vorrichtung nach einem der Ansprüche 6-8, wobei der Unterrahmen (14) mittels eines Schlittenmechanismus (13, 15, 16, 26) verschiebbar mit dem langen Fuß (12B) des Hauptrahmens (12) verbunden ist.

10. Vorrichtung nach Anspruch 9, wobei der Unterrahmen (14) in der Nähe eines Endes seines kurzen Fußes (14A) schwenkbar mit dem Schlittenmechanismus (13, 15, 16, 26) verbunden ist, um eine hauptsächlich senkrecht auf den Füßen (14A,B) vom Unterrahmen (14) stehende dritte Schwenkachse (C).

11. Vorrichtung nach Ansprüchen 7 und 10, wobei die zweite und die dritte Schwenkachse (B,C) hauptsächlich parallel verlaufen.

12. Vorrichtung nach Anspruch 10 oder 11, wobei die Angriffsmittel (5) schwenkbar mit dem Unterrahmen (14) verbunden sind, in der Nähe eines Endes des langen Fußes (14B), um eine hauptsächlich parallel zur dritten Schwenkachse (C) verlaufenden vierten Schwenkachse (D).

13. Vorrichtung nach einem der vorhergehenden Ansprüche, wobei die Angriffsmittel (5) Unterdruckmittel umfassen, insbesondere einen oder einen Satz Vakuumzylinder.

14. Vorrichtung nach einem der vorhergehenden Ansprüche, wobei das Untergestell (2) mit Stützmitteln (8) zur Unterstützung des Untergestells (2) im Hantierstand ausgestattet ist, welche Stützmittel (8) vorzugsweise abnehmbar oder einklappbar sind, sodass diese im Transportstand in den Umrissen des Untergestells (2) aufgenommen werden können, in Draufsicht betrachtet.

15. Vorrichtung nach einem der vorhergehenden Ansprüche, wobei eine in Verwendung in der Vorrichtung (1) aufgenommene Platte (10) im Transportstand einen Winkel mit der horizontalen Ebene zwischen 0° und 90° einschließt und vorzugsweise einen solchen Umfang hat, dass sich ein Ober- und Unterrand von der Platte (10), in Draufsicht betrachtet, zumindest teilweise innerhalb der Umrisse von Untergestell (2) erstrecken.

16. Vorrichtung nach einem der vorhergehenden Ansprüche, wobei eine in Verwendung in der Vorrichtung aufgenommene Platte (10) zumindest im Transportstand auf dem Untergestell (2) stützt, insbesondere in einer dazu im oder am Untergestell (2) vorgesehenen Stützleiste (9).

17. Vorrichtung nach einem der vorhergehenden Ansprüche, wobei die Breite (W) des Untergestells (2) kleiner ist als 80 cm, sodass das Untergestell (2) durch eine Standardtüröffnung passt.

## Claims

1. A device for handling of plates (10) having a mobile base frame (2), means (5) for gripping a plate (10) and a frame (3), which movably connects said gripping means (5) to said base frame (2), wherein said frame (3) is constructed of frame parts (12, 14) being pivotable and/or slidable among each other, which are displaceable with appropriate driving means (21-26) between:
- a transport stand, wherein said frame (3) and said gripping means (5) are received in a space with a rectangular triangular cross section, limited by said base frame (2), which forms the basis of the triangle, a plate (10) received in use in the device (1), which forms the bevelled side of the triangle and an imaginary vertical plane (V) through an upper edge of said plate (10), which forms the straight side of said triangle; and
- a handling stand, wherein said gripping means (5) and said frame (3) are extending at least partly beyond said above mentioned triangular space, into a three dimensional area extending about or besides said base frame (2), **characterized in that** said frame (3) is pivotably connected by means of a rotary table (11) to said base frame (2) about an essentially vertical first swivel axis (A).

2. The device according to claim 1, wherein said frame (3) is pivotably connected to the base frame (2) about a second swivel axis (B) essentially extending parallel to said base frame (2).

3. The device according to any of the preceding claims, wherein said gripping means (5) are pivotably connected to said frame (3) about two swivel axis (D, E) essentially perpendicular to each other.

4. The device according to any of the preceding claims, wherein said frame (3) comprises a main frame (12) connected to said base frame (2) and a subframe (14) connected to said gripping means (15).

5. The device according to claim 4, wherein said subframe (14) is slidably connected to said main frame (12).

6. The device according to claim 4 or 5, wherein said main frame (12) is essentially L-shaped, having a short foot (12A) and a long foot (12B).

7. The device according to claim 6, wherein said main frame (12) is connected to said base frame (2) near an end of said short foot (12A) about a second swivel axis (B) essentially horizontal, perpendicular to the feet (12A, B).

8. The device according to claim 6 or 7, wherein said subframe (14) is also essentially L-shaped and so large, that this subframe (14) can be received in the transport stand in a triangle tensioned from the short and the long foot (12A, B) of said main frame (12).

9. The device according to any of the claims 6-8, wherein said subframe (14) is slidably connected to the long foot (12B) of said main frame (12) by means of a slide mechanism (13, 15, 16, 26).

10. The device according to claim 9, wherein said subframe (14) is slidably connected to the slide mechanism (13, 15, 16, 26) near an end of its short foot (14A) about a third swivel axis (C) essentially perpendicularly to the feet (14A, B) of the subframe (14).

11. The device according to claims 7 and 10, wherein the second and the third swivel axis (B, C) are essentially parallel.

12. The device according to claim 10 or 11, wherein said gripping means (5) are pivotably connected to said subframe (14), near an end of said long foot (14B), about a fourth swivel axis (D) essentially parallel to said third swivel axis (C).

13. The device according to any of the preceding claims, wherein said gripping means (5) comprise low pressure means, particularly a or a set of vacuum cylinder(s).

14. The device according to any of the preceding claims, wherein said base frame (2) is furnished with support means (8) for supporting said base frame (2) in said handling stand, said support means (8) are preferably releasable or foldable, so that these can be received in the silhouette of the base frame (2) in the transport stand, seen in top view.

15. The device according to any of the preceding claims, wherein a plate (10) received in use in the device (1), incloses in said transport stand with the horizontal plane an angle between 0° and 90° and preferably has such a periphery that an upper and lower edge of the plate (10), seen as top view, extends at least partly inside of the silhouettes of said base frame (2).

16. The device according to any of the preceding claims, wherein a plate (10) received in use in the device is supported at least in the transport stand on said base frame (2), particularly in a supporting rail (9) provided in or at the base frame (2).

17. The device according to any of the preceding claims, wherein the width (W) of the base frame (2) is smaller than 80 cm, so that said base frame (2) passes through a standard door opening.

## Revendications

1. Dispositif pour manipuler des panneaux (10), comportant un bâti inférieur (2) mobile, des moyens (5) pour saisir un panneau (10) et un cadre (3), par lequel les moyens de préhension (5) sont reliés de manière mobile au bâti inférieur (2), le cadre (3) étant formé par des parties de cadre (12, 14), qui sont aptes à pivoter et/ou à coulisser entre elles et qui, par l'intermédiaire de moyens d'actionnement (21-26), peuvent être déplacées entre :
- un poste de transport, le cadre (3) et les moyens de préhension (5) étant reçus dans un espace avec une section en forme de triangle rectangle, délimité par le bâti inférieur (2), qui forme la base du triangle, un panneau (10), qui est reçu dans le dispositif (1) en vue d'être manipulé et qui forme le côté incliné du triangle, et un plan vertical (V) imaginaire à travers un bord supérieur du panneau (10), lequel forme le côté droit du triangle ; et
- un poste de manutention, les moyens de préhension (5) et le cadre (3) s'étendant au moins en partie en dehors de l'espace triangulaire susmentionné, dans une zone tridimensionnelle s'étendant autour ou à côté du bâti inférieur (2), **caractérisé en ce que** le cadre (3) est relié au bâti inférieur (2), par l'intermédiaire d'une plateau rotatif (11), de manière à pouvoir pivoter autour d'un premier axe de pivotement (A) sensiblement vertical.

2. Dispositif selon la revendication 1, dans lequel le cadre (3) est relié au bâti inférieur (2) de manière à pouvoir pivoter autour d'un deuxième axe de pivotement (B) sensiblement parallèle au bâti inférieur (2).

3. Dispositif selon l'une quelconque des revendications précédentes, dans lequel les moyens de préhension (5) sont reliés au cadre (3) de manière à pouvoir pivoter autour de deux axes de pivotement (D, E) sensiblement perpendiculaires entre eux.

4. Dispositif selon l'une quelconque des revendications précédentes, dans lequel le cadre (3) comporte un cadre principal (12), qui est relié au bâti inférieur (2), et un cadre inférieur (14), qui est relié aux moyens de préhension (15).

5. Dispositif selon la revendication 4, dans lequel le cadre inférieur (14) est relié de manière coulissante au cadre principal (12).

6. Dispositif selon la revendication 4 ou 5, dans lequel le cadre principal (12) est sensiblement en forme de L avec un pied court (12A) et un pied long (12B).

7. Dispositif selon la revendication 6, dans lequel le cadre principal (12), à proximité d'une extrémité du pied court (12A), est relié au bâti inférieur (2) de manière à pouvoir pivoter autour d'un deuxième axe de pivotement (B) sensiblement horizontal, reposant verticalement sur les pieds (12A, B).

8. Dispositif selon la revendication 6 ou 7, dans lequel le cadre inférieur (14) est également sensiblement en forme de L et a une dimension telle que ledit cadre inférieur (14) peut être reçu dans le poste de transport dans un triangle déployé par le pied long (12B) et le pied court (12A) du cadre principal (12).

9. Dispositif selon l'une quelconque des revendications 6 à 8, dans lequel le cadre inférieur (14) est relié, au moyen d'un mécanisme à chariot (13, 15, 16, 26), de manière coulissante avec le pied long (12b) du cadre principal (12).

10. Dispositif selon la revendication 9, dans lequel le cadre inférieur (14), à proximité d'une extrémité de son pied court (14A), est relié au mécanisme à chariot (13, 15, 16, 26) de manière à pouvoir pivoter autour d'un troisième axe de pivotement (C) reposant sensiblement verticalement sur les pieds (14A, B) du cadre inférieur (14).

11. Dispositif selon les revendications 7 et 10, dans lequel le deuxième et le troisième axe de pivotement (B, C) sont orientés sensiblement parallèlement.

12. Dispositif selon la revendication 10 ou 11, dans lequel les moyens de préhension (5) sont reliés avec le cadre inférieur (14), à proximité d'une extrémité du pied long (14B), de manière à pouvoir pivoter autour d'un quatrième axe de pivotement (D), sensiblement parallèle au troisième axe de pivotement (C).

13. Dispositif selon l'une quelconque des revendications précédentes, dans lequel les moyens de préhension (5) comportent des moyens à dépression, en particulier un ou un ensemble de vérin à vide.

14. Dispositif selon l'une quelconque des revendications précédentes, dans lequel le bâti inférieur (2) est muni de moyens de support (8) destinés à supporter le bâti inférieur (2) dans le poste de manutention, lesquels moyens de support (8) sont de préférence amovibles ou rabattables, de telle sorte que, dans le poste de transport, ils peuvent être logés à l'intérieur des contours du bâti inférieur (2), par référence à une vue en élévation.

15. Dispositif selon l'une quelconque des revendications précédentes, dans lequel un panneau (10), reçu dans le dispositif (1) en vue d'être manipulé, forme avec le plan horizontal, dans le poste de transport, un angle entre 0° et 90° et, de préférence, a un périmètre tel qu'un bord supérieur et un bord inférieur du panneau (10) s'étendent, par référence à une vue en élévation, au moins partiellement à l'intérieur des contours du bâti inférieur (2).

16. Dispositif selon l'une quelconque des revendications précédentes, dans lequel un panneau (10), reçu dans le dispositif (1) en vue d'être manipulé, prend appui, au moins dans le poste de transport, sur le bâti inférieur (2), en particulier dans une barre de support (9) prévue à cet effet dans ou sur le bâti inférieur (2).

17. Dispositif selon l'une quelconque des revendications précédentes, dans lequel la largeur (W) du bâti inférieur (2) est inférieure à 80 cm, de telle sorte que le bâti inférieur (2) peut passer à travers une baie d'une porte standard.
